# EUROPEAN PATENT SPECIFICATION

(11) **EP 4 280 072 B1**
(45) Date of publication and mention of the grant of the patent: **21.05.2025**
(21) Application number: 21925506.4
(22) Date of filing: 21.12.2021
(51) Int. Cl.: G06F 13/38, G06F 13/40

(54) **DATA TRANSMISSION METHOD OF ELECTRONIC DEVICE, ELECTRONIC DEVICE, AND INTERFACE CIRCUIT**
DATENÜBERTRAGUNGSVERFAHREN EINER ELEKTRONISCHEN VORRICHTUNG, ELEKTRONISCHE VORRICHTUNG UND SCHNITTSTELLENSCHALTUNG
PROCÉDÉ DE TRANSMISSION DE DONNÉES DE DISPOSITIF ÉLECTRONIQUE, DISPOSITIF ÉLECTRONIQUE ET CIRCUIT D'INTERFACE

(30) Priority: 10.02.2021 CN 202110186512
(43) Date of publication of application: 22.11.2023
(73) Proprietor: Huawei Technologies Co., Ltd., Shenzhen, Guangdong 518129 (CN)
(72) Inventor: XU, Yingqi, Shenzhen, Guangdong 518129 (CN); CHEN, Juntao, Shenzhen, Guangdong 518129 (CN); TANG, Zhiyong, Shenzhen, Guangdong 518129 (CN)
(74) Representative: Maiwald GmbH
(86) International application number: PCT/CN2021/140164
(87) International publication number: WO 2022/170861

(56) References cited:
- CN-A- 107 544 934
- CN-A- 107 580 701
- CN-A- 111 083 412
- CN-B- 108 604 218
- US-A1- 2009 179 883
- US-A1- 2015 363 339
- US-A1- 2019 310 700

## Description

### TECHNICAL FIELD

This application relates to the field of terminals, and in particular, to a data transmission method for an electronic device, an electronic device, and an interface circuit.

### BACKGROUND

US2019/310700A1 describes that a system includes a power delivery ("PD") controller in a USB Type-C system that includes a configuration channel ("CC"), PD preamble detector, and a power-usage circuit. It is described that the PD controller includes a CC input that receives a PD message. It is described that the PD preamble detector is configured to detect a PD message preamble based in part upon a power of a filtered PD message and communicates a wake-up signal to the power-usage circuit in response to detecting a PD message preamble. It is described that the power-usage circuit is configured to exit a low-power mode in response to receiving the wake-up signal.

Currently, there are more and more forms of electronic products, and video data is often received or output between the electronic products through a video interface. For example, a notebook computer may be connected to a large screen device, and the notebook computer transmits an operation interface as video data to the large screen device, and displays the operation interface of the notebook computer on the large screen device. Alternatively, the notebook computer may be further connected to a mobile phone to receive video data of an operation interface sent by the mobile phone and display the operation interface of the mobile phone on a screen of the notebook computer.

An existing video transmission interface can only be used as a video data input or a video data output independently. If a device supports both the video data input and the video data output, a plurality of video interfaces need to be set up for the video data input or the video data output. The structure is complex and a misoperation is easily caused.

### SUMMARY

Embodiments of this application provide a data transmission method for an electronic device, an electronic device, and an interface circuit, to resolve a problem that a video input port and a video output port need to be separately set when a device needs both a video data input and a video data output, a structure is complex, and a misoperation is easily caused.

Appended claim 1 defines a data transmission method for an electronic device. Appended claim 9 defines an electronic device. The invention and its scope of protection is defined by these claims.

### BRIEF DESCRIPTION OF DRAWINGS

FIG. 1 is a schematic diagram of an application scenario of a data transmission method for an electronic device according to an embodiment of this application;
FIG. 2 is a schematic diagram of pins of a Type-C port;
FIG. 3 is a schematic circuit diagram of an interface circuit according to an embodiment of this application;
FIG. 4 is a schematic structural diagram of an electronic device according to an embodiment of this application;
FIG. 5A and FIG. 5B are a schematic flowchart of a data transmission method for an electronic device according to an embodiment of this application;
FIG. 6 is a schematic structural diagram of a data transmission apparatus of an electronic device according to an embodiment of this application;
FIG. 7 is a schematic structural diagram of another data transmission apparatus of an electronic device according to an embodiment of this application; and
FIG. 8 is a schematic structural diagram of another electronic device according to an embodiment of this application.

### DESCRIPTION OF EMBODIMENTS

In other cases, detailed descriptions of well-known systems, apparatuses, circuits, and methods are omitted, so that this application is described without being obscured by unnecessary details.

It should also be understood that the term "and/or" used in this specification and the appended claims of this application refers to any combination and all possible combinations of one or more associated listed items, and includes these combinations.

As used in this specification and the appended claims of this application, according to the context, the term "if" may be interpreted as "when" or "once" or "in response to determining" or "in response to detecting".

In addition, in the descriptions of this specification and the appended claims of this application, the terms "first", "second", "third", and the like are merely intended for a purpose of differentiated description, but shall not be understood as an indication or an implication of relative importance.

Reference to "an embodiment", "some embodiments", or the like described in this specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized.

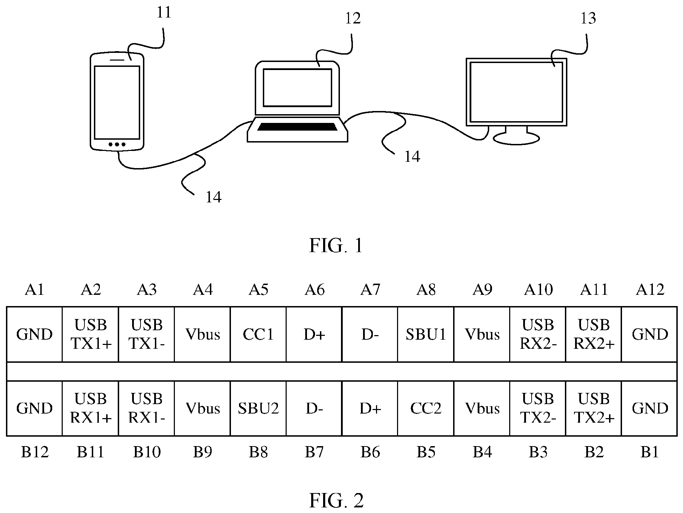

FIG. 1 is a schematic diagram of a connection scenario of an electronic device. For example, the electronic device may be a mobile phone, a tablet computer, a wearable device, an in-vehicle device, an augmented reality (augmented reality, AR) / virtual reality (virtual reality, VR) device, a notebook computer, an ultra-mobile personal computer (ultra-mobile personal computer, UMPC), a netbook, a personal digital assistant (personal digital assistant, PDA), or the like. A specific type of the electronic device is not limited in embodiments of this application.

Referring to FIG. 1, a smartphone 11, a notebook computer 12, and a display 13 are included. The smartphone 11 may be connected to the notebook computer 12 through a data cable 14, and the notebook computer 12 may be connected to the display 13 through the data cable 14. When being connected to the smartphone 11, the notebook computer 12 may be used as a video input device, and the smartphone 11 is used as a video output device. The notebook computer 12 receives and displays interface video data sent by the smartphone 11.

Alternatively, when being connected to the display 13, the notebook computer 12 may be used as a video output device, and the display 13 is used as a video input device. The notebook computer 12 sends an interface to the display 13 in a form of video data, and the display 13 displays the interface of the notebook computer 12.

In the prior art, when the notebook computer 12 is used as a video input device, a high-definition multimedia interface (High-Definition Multimedia Interface, HDMI), a Type-C port, a display port (Display Port, DP), or the like may be used as a video data input port. However, when the notebook computer 12 is used as a video output device, different HDMI interfaces, Type-C ports, DP interfaces, or the like are used as video data output ports.

When the foregoing electronic device is used, if a display input port and a display sending port are of a same type (for example, both are Type-C ports or both are DP interfaces), a function of each interface may not be accurately distinguished. As a result, a data cable connected to the source device is inserted into the display sending port, or a data cable connected to the sink device is inserted into the display input port.

In view of this, this application provides a data transmission method for an electronic device, an electronic device, and an interface circuit, to identify whether a sink device or a source device is connected, and connect the sink device to a display sending module or connect the source device to a display receiving module according to a type of the connected device. The multiplexing of display sending and display receiving is implemented on one bidirectional interface, so that a structure is simpler and a probability of a misoperation by a user is reduced.

This application further provides a bidirectional interface, used to implement the foregoing bidirectional signal or data transmission. The bidirectional interface described in this application represents an interface that implements bidirectional transmission such as bidirectional charging, bidirectional video signal transmission, and bidirectional audio signal transmission in this application. In some implementations, the bidirectional interface of the electronic device according to this application is a universal serial bus Type-C (Universal Serial Bus Type-c, Type-c) interface or optionally a lightning port (Lighting port). When the bidirectional interface is a Type-C port, video data can be transmitted through a DP1.2, DP1.4, or DP2.0 protocol.

FIG. 2 is a schematic diagram of pins of a Type-C port. The Type-C port includes two groups of pins that are symmetrically disposed, so that a data cable inserted into the Type-C port does not need to distinguish between a forward and a reverse direction, and the data cable can be normally used regardless of whether the data cable is inserted in the forward or reverse direction. When the electronic device (that is, a local device) detects that a data cable connected to a peer device is connected to the Type-C port, the electronic device may detect level states of configuration channels (Configuration channel, CC) 1 and CC2 by using a power delivery (power delivery, PD) controller of the electronic device, to determine a device type of the peer device. The device type includes a sink device (sink device is a display receiving device or a video input device) and a source device (source device is a display sending device or a video output device). The device type may further include a dual role port (dual role port, DRP) device. The DRP device has two roles, and may serve as both a sink device and a source device.

For example, when the data cable connected to the peer device is connected to the Type-C port, if the peer device is the sink device, the electronic device detects that the level states of the CC1 and the CC2 are low levels; if the peer device is the source device, the electronic device detects that the level states of the CC1 and the CC2 are high levels; or if the peer device is the DRP device, the electronic device detects that the level states of the CC1 and the CC2 are periodically switched between a high level and a low level.

It should be noted that the power delivery controller may be further configured to detect a DP capability of the peer device. For example, the power delivery controller may send a DP capability query instruction to the peer device through the CC1 and the CC2 according to a power delivery protocol, and receive DP capability information returned by the peer device.

The DP capability includes information about whether the peer device supports DP video transmission and a channel mode during video data transmission. The video data can be transmitted in a dual-channel mode (USB&DP mode) or a four-channel mode (DP ONLY mode). When the peer device supports the dual-channel mode, referring to the Type-C port shown in FIG. 2, data pins include a first transmit positive electrode pin (TX1+), a first transmit negative electrode pin (TX1-), a second transmit positive electrode pin (TX2+), a second transmit negative electrode pin (TX2-), a first receive positive electrode pin (RX1+), a first receive negative electrode pin (RX1-), a second receive positive electrode pin (RX2+), and a second receive negative electrode pin (RX2-). It should be noted that during data transmission, the data pins are divided into four groups according to receiving, sending, and positive and negative electrodes. For example, TX1+ and RX1- are a group of data pins, RX1+ and TX1- are a group of data pins, TX2+ and RX2- are a group of data pins, and RX2+ and TX2- are a group of data pins. Each group of data pins can be used to send and receive data.

When the peer device supports the dual-channel mode, USB data signals (USB SS) can be transmitted over TX1+ and RX1-, and RX1+ and TX1-, and two channels of DP signals (DP Main Lane 1 and DP Main Lane 0) can be transmitted over TX2+ and RX2-, and RX2+ and TX2-, respectively. Because the Type-C port is not distinguished between positive and negative directions, when the power delivery controller detects, by using the CC1 and the CC2, that the Type-C port (subport) of a connected data cable matches the Type-C port (female port) of the electronic device, the pins do not need to be flipped, and the foregoing pins may be used to transmit the two DP signals and the USB data signal. If the power delivery controller detects, by using the CC1 and the CC2, that the Type-C port of a connected data cable does not match the Type-C port of the electronic device, the pins of the Type-C port need to be flipped, the two DP signals may be transmitted over TX1+ and RX1-, and RX1+ and TX1-, respectively, and the USB data signal is transmitted over TX2+ and RX2-, and RX2+ and TX2-.

When the peer device supports the four-channel mode, two DP signals (DP Main Lane 2 and DP Main Lane 3) may be transmitted over TX1+ and RX1-, and RX1+ and TX1-, respectively, and the two DP signals (DP Main Lane 1 and DP Main Lane 0) may be transmitted over TX2+ and RX2-, and RX2+ and TX2-, respectively. Similar to the dual-channel mode, if the power delivery controller detects, by using the CC1 and the CC2, that the pins of the Type-C port need to be flipped, the two DP signals (DP Main Lane 1 and DP Main Lane 0) may be transmitted over TX1+ and RX1-, and RX1+ and TX1-, respectively, and the two DP signals (DP Main Lane 2 and DP Main Lane 3) may be transmitted over TX2+ and RX2-, and RX2+ and TX2-, respectively.

It should be noted that, when the DP signal is transmitted over the foregoing pins, an audio signal may also be transmitted by using a sideband use (Sideband Use, SBU) 1 and a SBU2 by using a sideband, to implement simultaneous transmission of audio and a video.

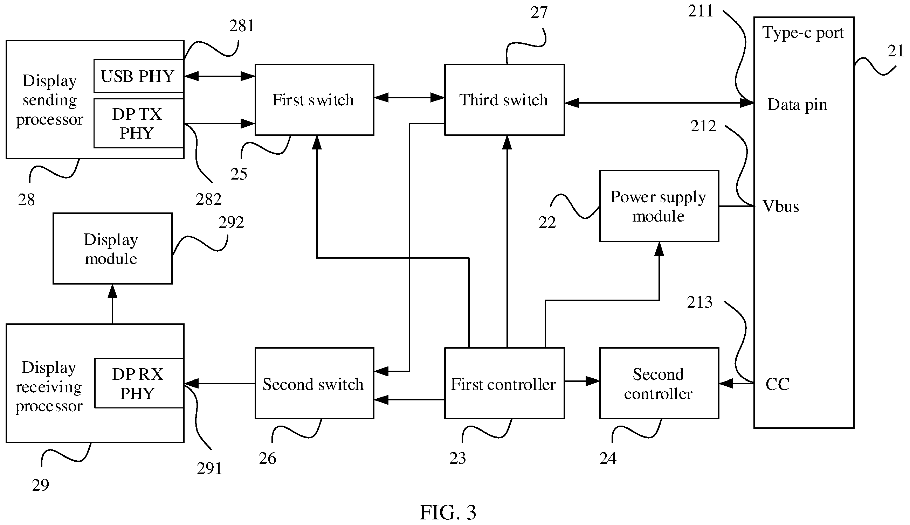

An electronic device is provided. A bidirectional interface of the electronic device is a Type-C port. For example, when the electronic device performs the data transmission method through the bidirectional interface, refer to a circuit shown in FIG. 3. The circuit includes a Type-C port 21, a power supply module 22, a first controller 23, a second controller 24, a first switch 25, a second switch 26, a third switch 27, a display sending processor 28, and a display receiving processor 29. The circuit may be applied to an electronic device, for example, a mobile phone, a tablet computer, a notebook computer, or a large screen device. This is not limited herein.

The first switch 25, the second switch 26, and the third switch 27 include but are not limited to a digital switch, a transistor (MOSFET), a triode (BJT), a relay, and the like.

The power supply module includes but is not limited to different voltage conversion modules such as a buck (Buck) circuit, a boost (Boost) circuit, a buck-boost (Buck-Boost) circuit, and a low dropout (LDO) regulator.

The first controller includes but is not limited to an embedded controller (Embedded Controller, EC), a complex programmable logic device (Complex Programming logic device, CPLD), a field-programmable gate array (Field-Programmable Gate Array, FPGA), or the like. The second controller may be a power delivery controller, and any processor that can process the PD protocol may be used as the power delivery controller.

It should be noted that, the first controller and the second controller may also be implemented by a unified controller.

The display sending processor includes but is not limited to a central processing unit (Central Processing Unit, CPU) having a display signal sending capability, a system on a chip (System on a Chip, SOC), and the like.

The display receiving processor refers to all modules that have capabilities of receiving and processing a DP signal, including but not limited to processors such as a display processing chip (Scaler) and a timing controller (Tcon).

The display module includes but is not limited to a module or device having a display function, for example, a liquid crystal display (Liquid Crystal Display, LCD), a micro light-emitting diode (micro Light-Emitting Diode, micro-LED) panel, and an organic light-emitting diode (Organic Light-Emitting Diode, OLED) panel.

Referring to the schematic diagram of the pins of the Type-C port shown in FIG. 2, the power supply module 22 is connected to a bus power supply (Vbus) pin 212 of the Type-C port 21 and the first controller 23. When the electronic device is required to supply power to the peer device, the first controller 23 may control the power supply module 22 to supply power by using the Vbus pin 212.

The second controller 24 is separately connected to the first controller 23 and a CC pin 213 (that is, the CC1 and the CC2 shown in FIG. 2) of the Type-C port 21. The second controller 24 may detect a level state of the CC pin 213, to determine the device type of the peer device and obtain a DP capability of the peer device.

The display sending processor 28 includes a USB physical layer interface (USB PHY) 281 and a DP transmit physical layer interface (DP TX PHY) 282, and the first switch 25 is connected to the USB physical layer interface 281 of the display sending processor 28 and the DP transmit physical layer interface 282, respectively. The first switch 25 is further connected to the third switch 27 and the first controller 23.

The display receiving processor 29 includes a DP receiving physical layer interface (DP RX PHY) 291 and a display module 292 connected to the display receiving processor 29. The second switch 26 is separately connected to the DP receiving physical layer interface (DP RX PHY) 291 of the display receiving processor 29. The second switch 26 is further connected to the third switch 27 and the first controller 23.

The first controller 23 may control connection and disconnection of the first switch 25, the second switch 26, and the third switch 27 according to the device type of the peer device and the DP capability of the peer device that are acquired by the second controller 24, and set the electronic device as a sink device or a source device.

In an example, if it is determined that the peer device is the source device and the electronic device is the sink device, a path of a DP TX PHY 282 in the first switch 25 may be disconnected, the second switch 26 and the third switch 27 are connected, and the data pins are connected to the DP RX PHY 291. For example, if the peer device supports the dual-channel mode, TX1+ and RX1-, and RX1+ and TX1- in the data pins may be connected to the USB PHY 281, and TX2+ and RX2-, and RX2+ and TX2- in the data pins may be connected to the DP RX PHY 291. Alternatively, if the peer device supports the four-channel mode, a channel between the first switch 25 and the USB PHY 281 may be further disconnected, and the TX1+RX1-, RX1+TX1-, TX2+RX2-, and RX2+TX2- in the data pins are all connected to the DP RX PHY 291.

In another example, if it is determined that the peer device is the sink device and the electronic device is the source device, the second switch 26 may be disconnected, the first switch 25 and the third switch 27 may be connected, and the data pins are connected to the DP TX PHY 282. For example, if the peer device supports the dual-channel mode, TX1+ and RX1-, and RX1+ and TX1- in the data pins may be connected to the USB PHY 281, and TX2+ and RX2-, and RX2+ and TX2- in the data pins may be connected to the DP TX PHY 282. Alternatively, if the peer device supports the four-channel mode, the TX1+RX1-, RX1+TX1-, TX2+RX2-, and RX2+TX2-in the data pins may all be connected to the DP TX PHY 282.

This application further provides a data transmission method for an electronic device, and the method may be applied to an electronic device, for example, a mobile phone, a tablet computer, a wearable device, a vehicle-mounted device, an augmented reality (augmented reality, AR) / virtual reality (virtual reality, VR) device, a notebook computer, an ultra-mobile personal computer (ultra-mobile personal computer, UMPC), a netbook, or a smart screen. A specific type of the terminal device is not limited in this embodiment of this application.

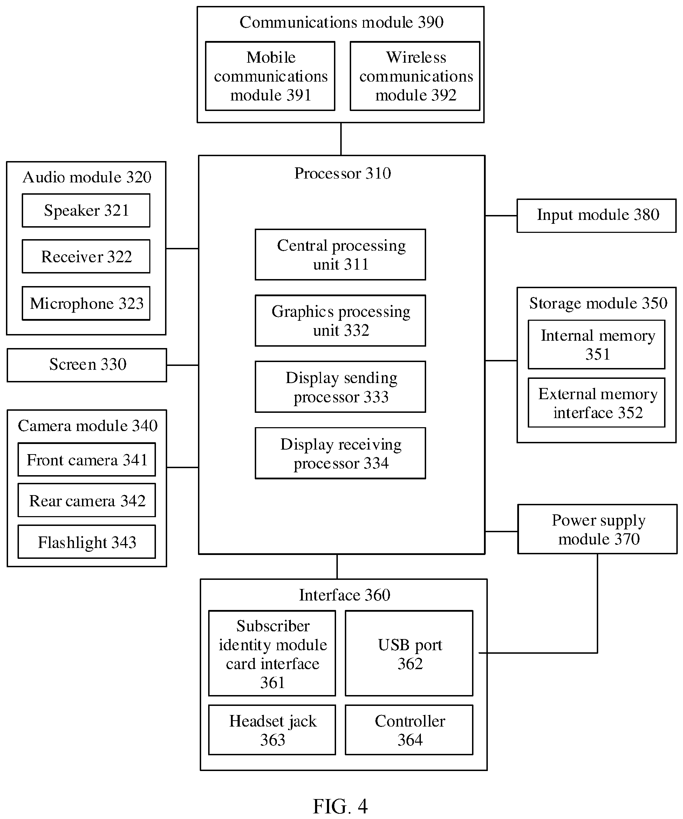

The electronic device herein is used as a mobile phone for description. As shown in FIG. 4, the electronic device may include components such as a processor 310, an audio module 320, a screen 330, a camera module 340, a storage module 350, an interface 360, a power supply module 370, an input module 380, and a communications module 390. It may be understood by a person skilled in the art that a structure of the terminal device shown in FIG. 4 constitutes no limitation on the terminal device. The terminal device may include more or fewer components than those shown in the figure, or combine some components, or have different component arrangements.

The following describes each component and module of the terminal device in detail with reference to FIG. 4.

The processor 310 is a control center of the terminal device, and the processor 310 may include a CPU 311 and a graphics processing unit (Graphics Processing Unit, GPU) 332. The CPU 310 may be connected to all parts of the terminal device through various interfaces and cables, and perform various functions of the terminal device and process data by running or executing a software program and/or a module stored in the storage module 350 and invoking data stored in the storage module 350. The GPU 332 is a microprocessor that can perform operations related to images and graphics. There are a plurality of forms of the GPU 332. For example, the GPU 332 may be disposed in a graphics card, or integrated in the CPU 311, or may exist in a form of an independent GPU chip.

When performing drawing and rendering on an image and a graphic, the GPU draws or renders the image or the graphic into a buffer (buffer). For the GPU disposed in the graphics card, the buffer is a video memory (also referred to as a frame cache) integrated in the graphics card. For the GPU integrated in the CPU or existing in the form of the independent GPU chip, the buffer may be a part of a running memory of the terminal device, for example, a part of space in a random access memory (Random Access Memory, RAM).

In some implementations, the CPU 311 may include one or more processing units. For example, the CPU may be a general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate, a transistor logic device, or a discrete hardware assembly.

It should be noted that the display sending processor 333 and the display receiving processor 334 may be modules that are independent of or integrated into the GPU and have display sending and display receiving functions. Alternatively, the display sending processor 333 and the display receiving processor 334 may be virtual processing modules that have display sending and display receiving functions and that are implemented by the GPU. A specific implementation of the virtual processing module is not limited herein.

In some other implementations, a modem processor may be further integrated into the processor 310. The modem processor mainly processes data related to wireless communication. This is not limited in this application.

The audio module 320 is configured to process an audio signal. For example, the audio module 320 may convert an analog audio signal received by a microphone 323 into digital audio data, and send the digital audio data to the processor 310. Alternatively, the audio module 320 may convert digital audio data sent by the processor 310 into an analog signal that can be played by a speaker 321 and a receiver 322, and send the analog signal to the speaker 321 or the receiver 322.

The screen 330 is configured to display, by visual output, content output by the terminal device. For example, the screen 330 may display information entered by a user, information provided for the user, a system interface of the terminal device, and an interface of an application running on the terminal device. A material of a display panel of the screen 330 may be a liquid crystal display (Liquid Crystal Display, LCD), a thin-film transistor (Thin-Film Transistor, TFT), a light-emitting semiconductor (Light-Emitting Diode, LED), an organic light-emitting semiconductor (Organic Light-Emitting Diode, OLED), or the like. This is not limited herein.

In some implementations, the display panel of the screen may further be covered with a touch panel. After detecting a touch operation performed on or near the touch panel, the touch panel transfers the touch operation to the processor 310 to determine a touch event, and then the processor 310 provides corresponding visual output on the display panel based on a type of the touch event. Although the screen and the touch panel (not shown) in FIG. 2 are two components that are independent of each other to implement input and output functions of the mobile phone, in some implementations, the touch panel and the display panel may be integrated to implement the input and output functions of the mobile phone.

The camera module 340 includes at least one camera, and the camera may be a front camera 341 or a rear camera 342.

For example, the terminal device may be a single camera, dual cameras, three cameras, or four cameras. For example, when there are four cameras, one camera is a front camera 341, and three cameras are rear cameras 342. The three rear cameras 342 may be cameras with different focal lengths, for example, a primary camera with an equivalent focal length of 35 mm, a wide-angle camera with an equivalent focal length of 20 mm, and a long-focus camera with an equivalent focal length of 105 mm. This is not limited in this embodiment of this application.

Optionally, when the terminal device includes a plurality of cameras, the plurality of cameras may all be disposed in the front; or may all be disposed in the rear; or some of the cameras may be disposed in the front, and others may be disposed in the rear. This is not limited in this embodiment of this application.

The storage module 350 includes an internal memory 351 and an external memory interface 352. The internal memory 351 may be a flash memory, a hard disk, an operation memory, or the like. For example, the internal memory may include at least one hard disk or flash memory, and one computing memory. The external memory interface 352 is configured to connect to an external memory, and the external memory may include a memory card, a removable hard disk, a USB flash drive, an optical disk, or the like.

The storage module 350 may be configured to store a software program and a module, and the processor 310 performs various functional applications of the terminal device and data processing by running the software program and the module stored in the storage module 350. The storage module 350 may mainly include a program storage area and a data storage area. The program storage area is usually located in the internal memory 351, and may store an operating system and an application required by at least one function (such as a sound playing function and a touch response function). The data storage area may be located in the internal memory 351, or located in an external memory connected to the external memory interface 352, or located in both the internal memory and the external memory. The data storage area may store data (such as audio data, image data, and video data) created according to use of a mobile phone.

The interface 360 includes but is not limited to a subscriber identity module (Subscriber Identity Module, SIM) card interface 361, a USB port 362, and a headset jack 363. The SIM card interface is used to insert a SIM card provided by an operator, so that when the terminal device is in communicative connection to a base station by using a mobile communications module 391, a user identity is identified and verified, and after the verification succeeds, a call request and a data request are sent to the base station, and a call, data, a short message, and the like that are forwarded by the base station are received.

The bidirectional interface of the electronic device may include the USB port 362, the headset jack 363, and a controller 364. The interface circuit shown in FIG. 3 may be applied to a USB Type-C port in the USB port 362, to implement bidirectional charging, bidirectional video transmission, bidirectional audio transmission, bidirectional data transmission, and the like.

The USB port 362 may connect the terminal device to a computer through a USB data cable, to perform data exchange. In addition, the USB port 362 is further connected to the power supply module 370. When the USB data cable is connected to a computer or a charging socket, the USB data cable may transmit input electric energy to the power supply module 370 to charge the terminal device. The USB port 362 may be a micro-USB, a mini-USB, a USB Type-C, or the like. This is not limited herein.

The headset jack 363 is used to connect to a headset. The headset jack 363 may be an independent interface. For example, the headset jack 363 may be a 3.5 mm headset jack. Alternatively, the headset jack 363 may be further integrated into the USB port 362. For example, the headset jack may be integrated into the USB Type-C. When a headset is inserted into the headset jack 363, the audio module 320 may no longer send an output analog audio signal to the speaker 321 or the receiver 322, but send the analog audio signal to the headset through the headset jack 363, and play audio by using the headset. When the headset is inserted, if it is detected that the headset does not include a microphone, the audio module still receives the analog audio signal sent by the microphone 323. If it is detected that the headset includes the microphone, the audio module receives an analog audio signal sent by the headset microphone, processes the analog audio signal, and sends the analog audio signal to the processor 310.

The controller 364 may include a first controller and a second controller in the interface circuit, and the first controller and the second controller may also be implemented by a unified controller. This is not limited herein.

The terminal device further includes a power supply module 370 that supplies power to each component. The power supply module may include a battery, a power management module, and the like. The power supply management module is logically connected to the processor 310 to implement functions such as charging/discharging management and power consumption management by using the power supply management module.

The input module 380 may be configured to receive input information and a key signal. The input information includes digit or character information, touch information, and the like. The key signal includes a pressing signal of a physical key, a pressing signal of a virtual key, and the like.

In an implementation, the input module 380 may include a touch panel and another input device. The touch panel and the screen 330 may form a touchscreen. The touch panel may collect a touch operation performed by a user on or near the touch panel (such as an operation performed by the user on or near the touchscreen by using an object or an accessory that can generate a touch signal on the touch panel, for example, a finger or a stylus), and drive to perform a corresponding function according to a preset program. Optionally, the touch panel may include two parts: a touch detection apparatus and a touch controller. The touch detection apparatus detects a touch position of a user, detects a signal generated by a touch operation, and transmits the signal to the touch controller. The touch controller receives touch information from the touch detection apparatus, converts the touch information into touch point coordinates, and sends the touch point coordinates to the processor 310. The processor 310 receives the sent touch point coordinates, converts the touch point coordinates into a touch command, and executes the touch command. The touch panel may be implemented in a plurality of types in resistive, capacitive, infrared, and surface acoustic waves. Another input device may include but is not limited to one or more of a physical keyboard, a function button (such as a volume control button or a power button), a trackball, a mouse, and a joystick.

The communications module 390 includes a mobile communications module 391 and a wireless communications module 392. The mobile communications module 391 may support any communications standard or protocol, including but not limited to a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), time-division WCDMA (Time-Division WCDMA, TD-WCDMA), time division LTE (Time-Division LTE, TD-LTE), fifth generation new radio (the 5th generation New Radio, 5G NR), and the like. The wireless communications module 392 may support Bluetooth (Bluetooth), Wireless Fidelity (Wireless Fidelity, Wi-Fi), Near Field Communication (Near Field Communication, NFC), and the like.

The mobile communications module 391 may be configured to connect to a communications base station by using an antenna, to establish a call link between the terminal device and another terminal device, and receive and send call audio. The wireless communications module 392 is configured to in wireless connection to an external device. The external device may be an external device that has a sound playing and sound receiving function, such as a Bluetooth headset or a Bluetooth speaker, or may be an external device that is used for input, such as a Bluetooth mouse or a Bluetooth keyboard. This is not limited herein.

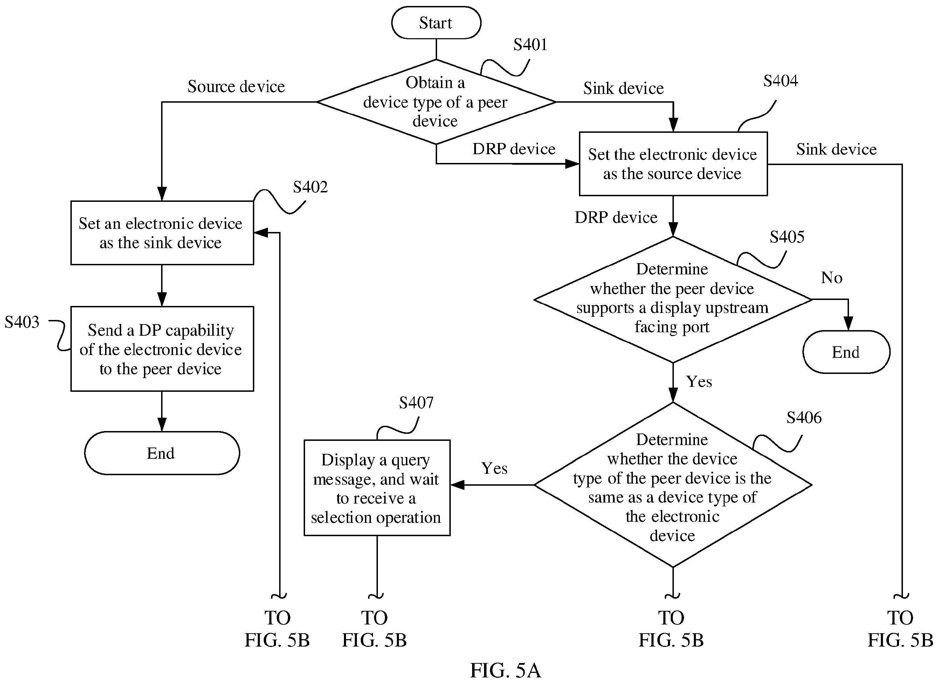

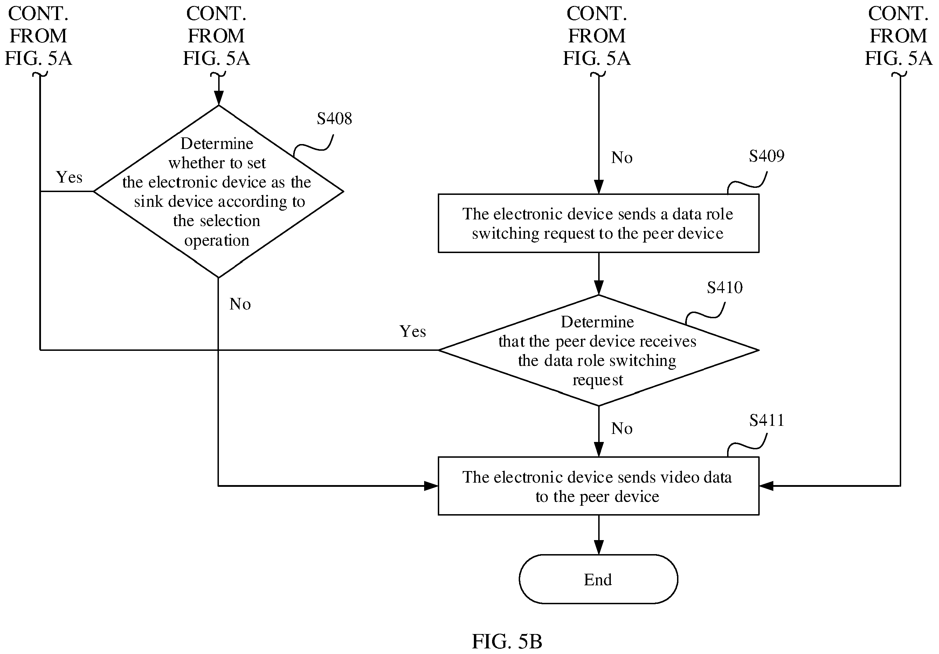

The Type-C port is used to describe a data transmission method for an electronic device according to this application with reference to the interface circuit shown in FIG. 3 and a flowchart shown in FIG. 5A and FIG. 5B.

Referring to FIG. 5A and FIG. 5B, the method includes the following steps.

S401: Obtain a device type of a peer device; and if the device type of the peer device is a source device, perform S402; or if the device type of the peer device is a sink device or a DRP device, perform S404.

In some implementations, the device type of the peer device may be determined by obtaining a level of a CC pin of the peer device. It should be noted that, after the peer device is connected to a bidirectional interface, pins of the peer device interface are connected to pins in the bidirectional interface of the electronic device. The level of the CC pin of the peer device is the level of the CC pin in the bidirectional interface of the electronic device. Referring to FIG. 2, the CC pin includes a CC1 or a CC2.

In an example, when an electronic device learns, by using a power delivery controller, that the level state of the CC pin on a data cable of the peer device that accesses the Type-C port of the electronic device is a high level, it may be determined that the peer device is a source device. When the acquired level state of the CC pin is a low level, it may be determined that the peer device is a sink device. When the acquired level of the CC pin on the data cable of the peer device periodically switches between a high level and a low level, it may be determined that the peer device is a DRP device.

S402: Set the electronic device as a sink device.

In some implementations, referring to FIG. 3, the electronic device is set as the sink device, including disconnecting a path of a DP TX PHY 282 in a first switch 25, connecting a second switch 26 and a third switch 27, and connecting data pins to the DP RX PHY.

S403: Send a DP capability of the electronic device to the peer device.

In some implementations, the DP capability includes dual-channel DP communication or four-channel DP communication. For example, the peer device is used as the source device and the electronic device is used as the sink device. The peer device receives a DP capability of the electronic device. For example, the electronic device may send DP capability information to the peer device by using a power delivery controller. For circuit connections in different DP capabilities, refer to the example in FIG. 3. Details are not described herein again.

It should be noted that, when the electronic device sends the DP capability information to the peer device by using the power delivery controller, the DP capability information may be sent by using a "Response Discover Modes" message specified in a power delivery protocol. The message includes device function information of the electronic device, for example, DP capability information and whether a display upstream facing port (Upstream Facing Port_Display, UFP_D) is supported.

S404: Set the electronic device as the source device, and when the device type of the peer device is a DRP device, perform S405; or when the device type of the peer device is the sink device, perform S411.

In some implementations, referring to FIG. 3, the electronic device is set as the source device, including disconnecting the second switch 26, connecting the first switch 25 and the third switch 27, and connecting data pins to the DP TX PHY.

It should be noted that, when the device type of the peer device is the sink device, S411 may be directly performed after the electronic device is set as the source device. When the device type of the peer device is the DRP device, the device type of the electronic device and the device type of the peer device need to be determined in a role negotiation process or a role switching process.

S405: Determine whether the peer device supports a display upstream facing port. If the display upstream facing port is supported, perform S406, or if the display upstream facing port is not supported, end a control process.

In this embodiment, reference may be made to the example in S403, and whether the peer device supports the UFP_D may also be determined by using a "Discover Modes" command. For example, according to stipulations in the power delivery protocol, the electronic device may send a "Discover Modes" command to the peer device, and the peer device receives the "Discover Modes" command and returns a "Response Discover Modes" message, where the message includes the DP capability information of the peer device and whether the peer device supports the UFP_D.

It should be noted that, if the peer device supports the UFP_D, it indicates that the peer device supports a capability of transmitting video data through the DP, and may be used as the sink device or the source device to start the role negotiation process or the role switching process. If the peer device does not support the UFP_D, it indicates that the peer device does not have a capability of transmitting video data through the DP, and cannot transmit video data, and therefore, a control process may be ended directly. By determining whether the peer device supports the UFP_D, a peer device that cannot be used for video data transmission may be excluded, thereby reducing unnecessary pairing procedures.

S406: Determine whether the device type of the peer device is the same as the device type of the electronic device, and if the device types are the same, perform S407, or if the device types are different, perform S409.

In some implementations, the supplier information may include a vendor identity document (vendor identity document, VID) or a subsystem vendor identity document (Subsystem vendor identity document, SVID), and the vendor information may include a product identity document (product identity document, PID). It may be determined, according to the VID and the SVID of the peer device and the PID, whether the device type of the peer device is the same as that of the electronic device. For example, after the electronic device is used as the source device, according to stipulations in the power delivery protocol, the electronic device may send a "Discover Identity" command and a "Discover SVIDs" command to the peer device, and receive "ACK Discover Identity" information and "ACK Discover SVIDs" information returned by the peer device. The "ACK Discover Identity" information includes the PID of the peer device, and the "ACK Discover SVIDs" information includes the SVID of the peer device. According to the VID/SVID and the PID, the device type supported by the peer device may be obtained by querying a pre-stored USB VID&PID table. For example, if it is obtained, according to the VID and the PID, that the peer device is a display produced by a manufacturer of brand A, it is determined that the peer device is the sink device, and the device type of the peer device is different from the device type of the electronic device. Alternatively, if it is determined, according to the obtained VID and the PID, that the peer device is a smart screen produced by a manufacturer of brand C, it may be determined that the peer device is the DRP device, and whether the peer device is the same as the device type of the electronic device needs to be determined based on specific settings of the DRP device.

In an example, the "Response Discover Modes" message may further include device type preference information. If the device type preference information of the DRP device is obtained, the device type of the peer device may be determined according to a preference set in the device type preference information. For example, the preference of the peer device may be set to "try sink" or "try source". The "try sink" indicates that the peer device is preferentially connected as the sink device during connection, and the "try source" indicates that the peer device is preferentially connected as the source device during connection. It may be determined, based on the preference setting of the DRP device, that the DRP device is the source device (the device type is the same as that of the electronic device) or the sink device (the device type is different from that of the electronic device). If the device type preference information of the DRP device cannot be obtained, the device type of the peer device is randomly set, then the device type of the peer device is determined according to a level of a CC pin, and then whether the device type of the peer device is the same as the device type of the electronic device is determined.

S407 and S408 are an example of a role negotiation process.

S407: Display a query message on the electronic device, and wait to receive a selection operation.

S408: Determine, according to the received selection operation, whether to set the electronic device as the sink device. If the electronic device is set as the sink device, perform S403; or if the electronic device is not set as the sink device, perform S411.

In some implementations, the electronic device is the source device. When the peer device is the source device, the device type of the electronic device and the device type of the peer device are the same. In this case, the query message may be displayed on the electronic device, to query a user to choose to set the electronic device as the source device or the sink device. For example, a pop-up window may be displayed on a screen of the electronic device, to provide an option of setting the electronic device as the source device or the sink device, and wait to receive a selection operation from the user. If the received selection operation indicates that the electronic device is set as the sink device, S403 may be performed. A DP capability of the electronic device is sent to the peer device, video data sent by the peer device is received, and the video data is displayed on the electronic device.

Alternatively, if the received selection operation indicates that the electronic device is set as the source device, S411 may be directly performed.

S409 and S410 are an example of a role switching process.

S409: The electronic device sends a data role switching request to the peer device.

S410: Determine whether the peer device accepts the data role switching request, and if the request is accepted, perform S402, or if the request is not accepted, perform S411.

In some implementations, the electronic device is the source device. When the peer device is randomly set as the sink device, although the device type of the peer device and the device type of the electronic device are different, because the peer device is randomly set as the sink device, the device type of the electronic device and the device type of the peer device may not meet an expected setting. To configure the electronic device and the peer device more accurately, the electronic device may send a request command "DR_Swap" of the data role switching request to the peer device according to stipulations in the power delivery protocol, to query whether the peer device needs to be switched to the source device. If the peer device replies with "Accept", it indicates that the peer device accepts the data role switching request and is switched to the source device. In this case, the electronic device performs S402 to set a final device type of the electronic device to the sink device. If the peer device replies with "Reject", it indicates that the peer device rejects the data role switching request, and a current status is maintained. In this case, a final device type of the electronic device is the source device.

S411: The electronic device sends video data to the peer device.

In some implementations, when sending the video data to the peer device, the electronic device may select, based on a DP capability of the peer device, the DP1.2 protocol, the DP1.4 protocol, or the DP2.0 protocol to transmit the video data. A specific transmission protocol is not limited in this application.

Optionally, in some other implementations, the electronic device supplies power to the peer device. For example, when the electronic device is a notebook computer and the peer device is a mobile phone, the notebook computer may charge the mobile phone when receiving video data sent by the mobile phone. In this case, the electronic device may further control a power supply module to supply power by using Vbus pins. A voltage and a current of the power supply are not limited in this application.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

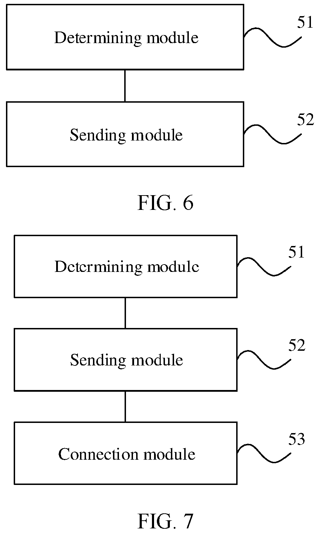

Corresponding to the data transmission method for the electronic device in the foregoing embodiment, FIG. 6 is a structural block diagram of a data transmission apparatus of an electronic device according to an embodiment of this application. For ease of description, only a part related to this embodiment of this application is shown.

Referring to FIG. 6, the apparatus includes the electronic device. The electronic device includes a bidirectional interface, and the bidirectional interface is used to send and receive multimedia data.

The apparatus includes a determining module 51, configured to: after a peer device is inserted into the bidirectional interface, determine a device type of the peer device and a device type of the electronic device.

The apparatus includes a sending module 52, configured to: after it is determined that the device type of the electronic device is a sink device, send multimedia data sent by the peer device to a display receiving processor of the electronic device through the bidirectional interface.

The sending module 52 is further configured to: after it is determined that the device type of the electronic device is a source device, send multimedia data generated by a display sending processor of the electronic device to the peer device through the bidirectional interface.

In some implementations, referring to FIG. 7, the apparatus further includes a connection module 53, configured to: after it is determined that the device type of the electronic device is the sink device, connect the bidirectional interface to the display receiving processor; or after it is determined that the device type of the electronic device is the source device, connect the bidirectional interface to the display sending processor.

In some implementations, the determining module 51 is specifically configured to determine the device type of the peer device according to a signal transmitted on the bidirectional interface; and determine the device type of the electronic device according to the device type of the peer device.

The bidirectional interface is a universal serial bus Type-C port.

The determining module 51 is specifically configured to: detect a level state of a pin on the bidirectional interface, and determine the device type of the peer device according to the level state of the pin. When the level state of the pin is a high level, the peer device is the source device; when the level state of the pin is a low level, the peer device is the sink device; or when the level state of the pin is switched between a high level and a low level, the peer device is a dual role port device.

In some implementations, the determining module 51 is specifically configured to: when the peer device is the source device, determine that the electronic device is the sink device; when the peer device is the sink device, determine that the electronic device is the source device; or when the peer device is the dual role port device, determine the device type of the electronic device and the device type of the peer device in a role negotiation process or a role switching process.

In some implementations, the determining module 51 is further configured to determine an initial device type of the electronic device as the source device.

In some implementations, the determining module 51 is further configured to obtain, through the bidirectional interface, information about whether the peer device supports a display upstream facing port, and start the role negotiation process or the role switching process for the peer device that supports the display upstream facing port.

In some implementations, the determining module 51 is further configured to: obtain, through the bidirectional interface, at least one of supplier information, vendor information, device type preference information, and device function information of the peer device; determine, based on the obtained information, whether the peer device and the electronic device are a same device; and if the peer device and the electronic device are the same, perform the role negotiation process, or if the peer device and the electronic device are different, perform the role switching process.

In some implementations, the role negotiation process includes: displaying a query message on the electronic device, where the query message is used to obtain a final device type of the electronic device; and setting a final device type of the peer device according to the final device type of the electronic device. The role switching process includes: sending a role switching request message to the peer device; and setting the final device type of the peer device and the final type of the electronic device according to a response message of the peer device.

In some implementations, the bidirectional interface is further used for bidirectional charging.

It should be noted that content such as information exchange between the foregoing apparatuses and an execution process thereof is based on a same concept as the method embodiments of this application. For details about specific functions and technical effects of the content, refer to the method embodiments. Details are not described herein again.

The functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the foregoing method embodiments. Details are not described herein again.

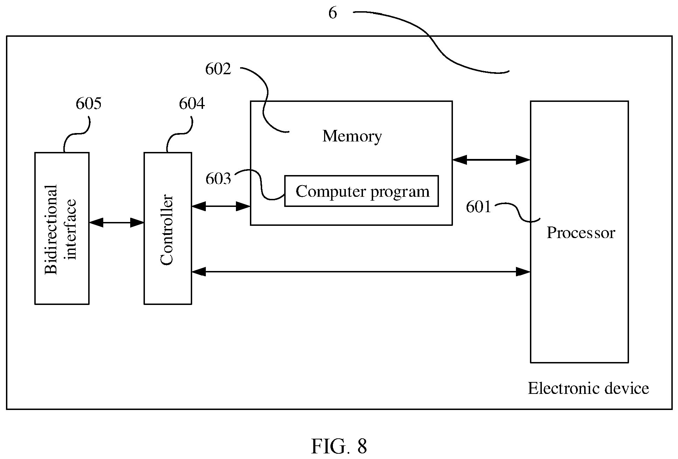

FIG. 8 is a schematic structural diagram of another electronic device. FIG. 8 provides an electronic device 6, including a bidirectional interface 605, a controller 604, and a processor 601. The processor 601 includes a display receiving processor and a display sending processor. The bidirectional interface 605 includes a pin, where the pin is configured to connect to a peer device inserted into the bidirectional interface. The controller 604 is configured to: determine a device type of the peer device and a device type of the electronic device 6; and after it is determined that the device type of the electronic device 6 is a sink device, send multimedia data sent by the peer device to the display receiving processor of the electronic device through the bidirectional interface; or after it is determined that the device type of the electronic device 6 is a source device, send multimedia data generated by the display sending processor of the electronic device 6 to the peer device through the bidirectional interface. The display receiving processor is configured to display the received multimedia data. The display sending processor is configured to process and obtain the multimedia data.

Referring to FIG. 8, the electronic device 6 may further include a memory 602 and a computer program 603 that is stored in the memory 602 and that can be run on the at least one processor 601. When the processor 601 executes the computer program 603, the steps in the data transmission method for the electronic device according to any one of the embodiments are implemented.

For example, the electronic device may further include an input/output device or a network access device.

The processor 601 may be a central processing unit (Central Processing Unit, CPU). The processor 601 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

In some embodiments, the memory 602 may be an internal storage unit of the electronic device 6, for example, a hard disk or memory of the electronic device 6. In some other embodiments, the memory 602 may alternatively be an external storage device of the electronic device 6, for example, a plug-in hard disk, a smart memory card (Smart Media Card, SMC), a secure digital (Secure Digital, SD) card, or a flash memory card (Flash Card) that is disposed on the electronic device 6. Further, the memory 602 may include both an internal storage unit and an external storage device of the electronic device 6. The memory 602 is configured to store an operating system, an application, a bootloader (BootLoader), data, another program, and the like, for example, program code of the computer program. The memory 602 may be further configured to temporarily store data that has been output or is to be output.

In some implementations, the electronic device 6 further includes a switch module, and after it is determined that the device type of the electronic device 6 is the sink device, the switch module is configured to connect the bidirectional interface 605 to the display receiving processor, or after it is determined that the device type of the electronic device is the source device, the switch module is configured to connect the bidirectional interface 605 to the display sending processor.

In some implementations, the switch module includes a first switch, a second switch, and a third switch. The first switch is connected to the display sending processor, the second switch is connected to the display receiving processor, and the third switch is connected to the pin. After it is determined that the device type of the electronic device 6 is the sink device, the controller 604 controls the second switch to connect to the third switch, or after it is determined that the device type of the electronic device 6 is the source device, the controller 604 controls the first switch to connect to the third switch.

The controller 604 is configured to: detect a level state of the pin on the bidirectional interface, determine the device type of the peer device according to the level state of the pin, and determine the device type of the electronic device according to the device type of the peer device.

In some implementations, the electronic device 6 further includes a power supply module, and the power supply module is connected to the pin. The controller 604 is further configured to control the power supply module to charge the peer device.

In some implementations, the power supply module is further configured to receive power transmitted by the peer device through the bidirectional interface 605.

The bidirectional interface 605 is a universal serial bus Type-C port or optionally a lightning port.

In some implementations, the controller that detects the level state of a first pin on the bidirectional interface 605 is a power delivery controller. When the bidirectional interface 605 is a Type-C port, referring to FIG. 2, the first pin may be a CC1 pin or a CC2 pin.

An embodiment of this application further provides an interface circuit. The interface circuit is configured to be disposed on an electronic device, and includes an interface module, a switch module, and a controller. The interface module includes a pin, where the pin is configured to connect to a peer device inserted into a bidirectional interface. The controller is configured to: determine a device type of the peer device and a device type of the electronic device; and after it is determined that the device type of the electronic device is a sink device, connect the interface module to a display receiving processor of the electronic device by using the switch module; or after it is determined that the device type of the electronic device is a source device, connect the interface module to a display sending processor of the electronic device by using the switch module.

In some implementations, the switch module includes a first switch, a second switch, and a third switch. The first switch is configured to connect to the display sending processor, the second switch is configured to connect to the display receiving processor, and the third switch is connected to the pin. After it is determined that the device type of the electronic device is the sink device, the controller controls the second switch to connect to the third switch, or after it is determined that the device type of the electronic device is the source device, the controller controls the first switch to connect to the third switch.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the mobile terminal is enabled to implement the steps in the foregoing method embodiments when executing the computer program product.

An embodiment of this application provides a chip system. The chip system includes a memory and a processor. The processor executes a computer program stored in the memory, to implement the steps in the foregoing method embodiments.

An embodiment of this application provides a chip system. The chip system includes a processor. The processor is coupled to a computer-readable storage medium. The processor executes a computer program stored in the computer-readable storage medium, to implement the steps in the foregoing method embodiments.

When the integrated unit is implemented in the form of a software functional unit and sold or used as an independent product, the integrated unit may be stored in a computer-readable storage medium. Based on such an understanding, all or some of the procedures of the method in embodiments of this application may be implemented by a computer program instructing related hardware. The computer program may be stored in a computer-readable storage medium. When the computer program is executed by the processor, the steps in the foregoing method embodiments may be implemented. The computer program includes computer program code. The computer program code may be in a source code form, an object code form, an executable file form, some intermediate forms, or the like. The computer-readable medium may include at least any entity or apparatus that can carry the computer program code to an electronic device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disk. In some jurisdictions, the computer-readable medium cannot be the electrical carrier signal or the telecommunications signal according to legislation and patent practices.

In the foregoing embodiments, descriptions of each embodiment have respective focuses. For a part that is not described in detail or recorded in an embodiment, refer to related descriptions in other embodiments.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

For example, division into the modules or units is merely logical function division and may be other division in actual implementation. For example, a plurality of units or components may be combined or integrated into another system. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in embodiments.

## Claims

1. A data transmission method for an electronic device, wherein the electronic device comprises a bidirectional interface (21, 605), the bidirectional interface is used to send and receive multimedia data, and the method comprises:
after a peer device is inserted into the bidirectional interface, determining a device type of the peer device and a device type of the electronic device; and
after it is determined that the device type of the electronic device is a sink device, sending the multimedia data sent by the peer device to a display receiving processor (29, 334) of the electronic device through the bidirectional interface, wherein the sink device is a display receiving device or a video input device, and wherein the display receiving processor comprises a Display Port receiving physical layer interface (291);
after it is determined that the device type of the electronic device is a source device, sending the multimedia data generated by a display sending processor (28, 333) of the electronic device to the peer device through the bidirectional interface, wherein the source device is a display sending device or a video output device, and wherein the display sending processor comprises a Display Port transmit physical layer interface (282);
wherein the method further comprises:
after it is determined that the device type of the electronic device is the sink device, connecting the bidirectional interface to the display receiving processor;
after it is determined that the device type of the electronic device is the source device, connecting the bidirectional interface to the display sending processor;
wherein the determining a device type of the peer device and a device type of the electronic device comprises:
determining the device type of the peer device according to a signal transmitted on the bidirectional interface; and
determining the device type of the electronic device according to the device type of the peer device;
wherein the bidirectional interface is a universal serial bus Type-C port; and
the determining the device type of the peer device according to a signal transmitted on the bidirectional interface comprises:
detecting a level state of a pin on the bidirectional interface, and determining the device type of the peer device according to the level state of the pin, wherein when the level state of the pin is a high level, the peer device is the source device; when the level state of the pin is a low level, the peer device is the sink device:
wherein the determining the device type of the electronic device according to the device type of the peer device comprises:
when the peer device is the source device, determining that the electronic device is the sink device;
when the peer device is the sink device, determining that the electronic device is the source device.

2. The method according to claim 1, wherein when the level state of the pin is switched between a high level and a low level, the peer device is a dual role port device.

3. The method according to claim 2, wherein when the peer device is the dual role port device, determining the device type of the electronic device and the device type of the peer device via a role negotiation process or a role switching process.

4. The method according to any of claims 1-3 wherein before determining the device type of the electronic device and the device type of the peer device via a role negotiation process or a role switching process, the method further comprises:
determining an initial device type of the electronic device as the source device.

5. The method according to claim 4, wherein after determining an initial device type of the electronic device as the source device, the method further comprises:
obtaining, through the bidirectional interface, information about whether the peer device supports a display upstream facing port, and starting the role negotiation process or the role switching process for the peer device that supports the display upstream facing port.

6. The method according to claim 4 or 5, wherein after determining an initial device type of the electronic device as the source device, the method further comprises:
obtaining, through the bidirectional interface, at least one type of information among supplier information, vendor information, device type preference information, and device function information of the peer device; determining, based on the obtained information, whether the peer device and the electronic device are the same device; and if the peer device and the electronic device are the same, performing the role negotiation process, or if the peer device and the electronic device are different, performing the role switching process.

7. The method according to any one of claims 3 to 6, wherein the role negotiation process comprises: displaying a query message on the electronic device, wherein the query message is used to obtain a final device type of the electronic device; and
setting a final device type of the peer device according to the final device type of the electronic device; and
the role switching process comprises: sending a role switching request message to the peer device; and
setting the final device type of the peer device and the final type of the electronic device according to a response message of the peer device.

8. The method according to any one of claims 1 to 7, wherein the bidirectional interface is further used for bidirectional charging.

9. An electronic device, wherein the electronic device comprises a bidirectional interface (21, 505), a controller (604), a display receiving processor (29, 334), and a display sending processor (28, 333), wherein
the bidirectional interface comprises a pin, wherein the pin is configured to connect to a peer device inserted into the bidirectional interface, and wherein the bidirectional interface is a universal serial bus Type-C port;
the controller is configured to: determine a device type of the peer device and a device type of the electronic device; and after it is determined that the device type of the electronic device is a sink device, send multimedia data sent by the peer device to the display receiving processor of the electronic device through the bidirectional interface, wherein the sink device is a display receiving device or a video input device, and wherein the display receiving processor comprises a Display Port receiving physical layer interface (291); after it is determined that the device type of the electronic device is a source device, send multimedia data generated by the display sending processor of the electronic device to the peer device through the bidirectional interface, wherein the source device is a display sending device or a video output device, and wherein the display sending processor comprises a Display Port transmit physical layer interface (282);
the display receiving processor is configured to display the received multimedia data; and
the display sending processor is configured to process and obtain the multimedia data,
wherein the electronic device further comprises a switch module, and after it is determined that the device type of the electronic device is the sink device, the switch module is configured to connect the bidirectional interface to the display receiving processor, and after it is determined that the device type of the electronic device is the source device, the switch module is configured to connect the bidirectional interface to the display sending processor;
wherein the controller is configured to: detect a level state of the pin on the bidirectional interface, determine the device type of the peer device according to the level state of the pin, and determine the device type of the electronic device according to the device type of the peer device, and wherein when the peer device is the source device, the electronic device is determined to be the sink device, and when the peer device is the sink device, the electronic device is determined to be the source device.

10. The electronic device according to claim 9 wherein the switch module comprises a first switch, a second switch, and a third switch, the first switch is connected to the display sending processor, the second switch is connected to the display receiving processor, the third switch is connected to the pin, and after it is determined that the device type of the electronic device is the sink device, the controller controls the second switch to connect to the third switch, or after it is determined that the device type of the electronic device is the source device, the controller controls the first switch to connect to the third switch.

## Patentansprüche

1. Datenübertragungsverfahren für eine elektronische Vorrichtung, wobei die elektronische Vorrichtung eine bidirektionale Schnittstelle (21, 605) umfasst, die bidirektionale Schnittstelle dazu verwendet wird, Multimediadaten zu senden und zu empfangen, und das Verfahren Folgendes umfasst:
nachdem eine Peer-Vorrichtung in die bidirektionale Schnittstelle eingesteckt wird, Bestimmen einer Vorrichtungsart der Peer-Vorrichtung und einer Vorrichtungsart der elektronischen Vorrichtung; und
nachdem bestimmt wird, dass die Vorrichtungsart der elektronischen Vorrichtung eine Senkenvorrichtung ist, Senden der Multimediadaten, die durch die Peer-Vorrichtung gesendet werden, an einen Anzeigeempfangsprozessor (29, 334) der elektronischen Vorrichtung über die bidirektionale Schnittstelle, wobei die Senkenvorrichtung eine Anzeigeempfangsvorrichtung oder eine Videoeingabevorrichtung ist und wobei der Anzeigeempfangsprozessor eine Anzeigeanschlussempfangsschnittstelle (291) einer physischen Schicht umfasst;
nachdem bestimmt wird, dass die Vorrichtungsart der elektronischen Vorrichtung eine Quellvorrichtung ist, Senden der Multimediadaten, die durch einen Anzeigesendeprozessor (28, 333) der elektronischen Vorrichtung erzeugt werden, an die Peer-Vorrichtung über die bidirektionale Schnittstelle, wobei die Quellvorrichtung eine Anzeigesendevorrichtung oder eine Videoausgabevorrichtung ist und wobei der Anzeigesendeprozessor eine Anzeigeanschlussübertragungsschnittstelle (282) einer physischen Schicht umfasst;
wobei das Verfahren ferner Folgendes umfasst:
nachdem bestimmt wird, dass die Vorrichtungsart der elektronischen Vorrichtung die Senkenvorrichtung ist, Verbinden der bidirektionalen Schnittstelle mit dem Anzeigeempfangsprozessor;
nachdem bestimmt wird, dass die Vorrichtungsart der elektronischen Vorrichtung die Quellvorrichtung ist, Verbinden der bidirektionalen Schnittstelle mit dem Anzeigesendeprozessor;
wobei das Bestimmen einer Vorrichtungsart der Peer-Vorrichtung und einer Vorrichtungsart der elektronischen Vorrichtung Folgendes umfasst:
Bestimmen der Vorrichtungsart der Peer-Vorrichtung gemäß einem Signal, das über die bidirektionale Schnittstelle übertragen wird; und
Bestimmen der Vorrichtungsart der elektronischen Vorrichtung gemäß der Vorrichtungsart der Peer-Vorrichtung;
wobei die bidirektionale Schnittstelle ein Universal-Serial-Bus-Anschluss der Art C ist; und
das Bestimmen der Vorrichtungsart der Peer-Vorrichtung gemäß einem Signal, das über die bidirektionale Schnittstelle übertragen wird, Folgendes umfasst:
Detektieren eines Ebenenzustands eines Pins auf der bidirektionalen Schnittstelle und Bestimmen der Vorrichtungsart der Peer-Vorrichtung gemäß dem Ebenenzustand des Pins, wobei, wenn der Ebenenzustand des Pins eine hohe Ebene ist, die Peer-Vorrichtung die Quellvorrichtung ist; wenn der Ebenenzustand des Pins eine niedrige Ebene ist, die Peer-Vorrichtung die Senkenvorrichtung ist;
wobei das Bestimmen der Vorrichtungsart der elektronischen Vorrichtung gemäß der Vorrichtungsart der Peer-Vorrichtung Folgendes umfasst:
wenn die Peer-Vorrichtung die Quellvorrichtung ist, Bestimmen, dass die elektronische Vorrichtung die Senkenvorrichtung ist;
wenn die Peer-Vorrichtung die Senkenvorrichtung ist, Bestimmen, dass die elektronische Vorrichtung die Quellvorrichtung ist.

2. Verfahren nach Anspruch 1, wobei, wenn der Ebenenzustand des Pins zwischen einer hohen Ebene und einer niedrigen Ebene umgeschaltet wird, die Peer-Vorrichtung eine Doppelrollenanschlussvorrichtung ist.

3. Verfahren nach Anspruch 2, wobei, wenn die Peer-Vorrichtung die Doppelrollenanschlussvorrichtung ist, die Vorrichtungsart der elektronischen Vorrichtung und die Vorrichtungsart der Peer-Vorrichtung über einen Rollenverhandlungsprozess oder einen Rollenumschaltprozess bestimmt werden.

4. Verfahren nach einem der Ansprüche 1-3, wobei das Verfahren vor dem Bestimmen der Vorrichtungsart der elektronischen Vorrichtung und der Vorrichtungsart der Peer-Vorrichtung über einen Rollenverhandlungsprozess oder einen Rollenumschaltprozess ferner Folgendes umfasst:
Bestimmen einer anfänglichen Vorrichtungsart der elektronischen Vorrichtung als die Quellvorrichtung.

5. Verfahren nach Anspruch 4, wobei das Verfahren nach dem Bestimmen einer anfänglichen Vorrichtungsart der elektronischen Vorrichtung als die Quellvorrichtung ferner Folgendes umfasst:
Erlangen, über die bidirektionale Schnittstelle, von Informationen darüber, ob die Peer-Vorrichtung einen stromaufwärts gewandten Anzeigeanschluss unterstützt, und Starten des Rollenverhandlungsprozesses oder des Rollenumschaltprozesses für die Peer-Vorrichtung, die den stromaufwärts gewandten Anzeigeanschluss unterstützt.

6. Verfahren nach Anspruch 4 oder 5, wobei das Verfahren nach dem Bestimmen einer anfänglichen Vorrichtungsart der elektronischen Vorrichtung als die Quellvorrichtung ferner Folgendes umfasst:
Erlangen, über die bidirektionale Schnittstelle, mindestens einer Art von Informationen unter Lieferanteninformationen, Verkäuferinformationen, Vorrichtungsartpräferenzinformationen und Vorrichtungsfunktionsinformationen der Peer-Vorrichtung;
Bestimmen, basierend auf den erlangten Informationen, ob die Peer-Vorrichtung und die elektronische Vorrichtung dieselbe Vorrichtung sind; und, wenn die Peer-Vorrichtung und die elektronische Vorrichtung dieselbe sind, Durchführen des Rollenverhandlungsprozesses oder, wenn die Peer-Vorrichtung und die elektronische Vorrichtung unterschiedlich sind, Durchführen des Rollenumschaltprozesses.

7. Verfahren nach einem der Ansprüche 3 bis 6, wobei der Rollenverhandlungsprozess Folgendes umfasst: Anzeigen einer Abfragenachricht auf der elektronischen Vorrichtung, wobei die Abfragenachricht dazu verwendet wird, eine endgültige Vorrichtungsart der elektronischen Vorrichtung zu erlangen; und
Einstellen einer endgültigen Vorrichtungsart der Peer-Vorrichtung gemäß der endgültigen Vorrichtungsart der elektronischen Vorrichtung; und
der Rollenumschaltprozess Folgendes umfasst: Senden einer Rollenumschaltanforderungsnachricht an die Peer-Vorrichtung; und
Einstellen der endgültigen Vorrichtungsart der Peer-Vorrichtung und der endgültigen Art der elektronischen Vorrichtung gemäß einer Antwortnachricht der Peer-Vorrichtung.

8. Verfahren nach einem der Ansprüche 1 bis 7, wobei die bidirektionale Schnittstelle ferner zu bidirektionalem Laden verwendet wird.

9. Elektronische Vorrichtung, wobei die elektronische Vorrichtung eine bidirektionale Schnittstelle (21, 505), eine Steuerung (604), einen Anzeigeempfangsprozessor (29, 334) und einen Anzeigesendeprozessor (28, 333) umfasst, wobei
die bidirektionale Schnittstelle einen Pin umfasst, wobei der Pin dazu konfiguriert ist, sich mit einer Peer-Vorrichtung, die in die bidirektionale Schnittstelle eingesteckt ist, zu verbinden, und wobei die bidirektionale Schnittstelle ein Universal-Serial Bus-Anschluss der Art C ist;
die Steuerung zu Folgendem konfiguriert ist: Bestimmen einer Vorrichtungsart der Peer-Vorrichtung und einer Vorrichtungsart der elektronischen Vorrichtung; und, nachdem bestimmt wird, dass die Vorrichtungsart der elektronischen Vorrichtung eine Senkenvorrichtung ist, Senden von Multimediadaten, die durch die Peer-Vorrichtung an den Anzeigeempfangsprozessor der elektronischen Vorrichtung gesendet werden, über die bidirektionale Schnittstelle, wobei die Senkenvorrichtung eine Anzeigeempfangsvorrichtung oder eine Videoeingabevorrichtung ist und wobei der Anzeigeempfangsprozessor eine Anzeigeanschlussempfangsschnittstelle (291) einer physischen Schicht umfasst; nachdem bestimmt wird, dass die Vorrichtungsart der elektronischen Vorrichtung eine Quellvorrichtung ist, Senden von Multimediadaten, die durch den Anzeigesendeprozessor der elektronischen Vorrichtung erzeugt werden, an die Peer-Vorrichtung über die bidirektionale Schnittstelle, wobei die Quellvorrichtung eine Anzeigesendevorrichtung oder eine Videoausgabevorrichtung ist und wobei der Anzeigesendeprozessor eine Anzeigeanschlussübertragungsschnittstelle (282) einer physischen Schicht umfasst;
der Anzeigeempfangsprozessor dazu konfiguriert ist, die empfangenen Multimediadaten anzuzeigen; und
der Anzeigesendeprozessor dazu konfiguriert ist, die Multimediadaten zu verarbeiten und zu erlangen,
wobei die elektronische Vorrichtung ferner ein Schaltmodul umfasst und, nachdem bestimmt wird, dass die Vorrichtungsart der elektronischen Vorrichtung die Senkenvorrichtung ist, das Schaltmodul dazu konfiguriert ist, die bidirektionale Schnittstelle mit dem Anzeigeempfangsprozessor zu verbinden, und nachdem bestimmt wird, dass die Vorrichtungsart der elektronischen Vorrichtung die Quellvorrichtung ist, das Schaltmodul dazu konfiguriert ist, die bidirektionale Schnittstelle mit dem Anzeigesendeprozessor zu verbinden;
wobei die Steuerung zu Folgendem konfiguriert ist: Detektieren eines Ebenenzustands des Pins auf der bidirektionalen Schnittstelle, Bestimmen der Vorrichtungsart der Peer-Vorrichtung gemäß dem Ebenenzustand des Pins und Bestimmen der Vorrichtungsart der elektronischen Vorrichtung gemäß der Vorrichtungsart der Peer-Vorrichtung, und wobei, wenn die Peer-Vorrichtung die Quellvorrichtung ist, bestimmt wird, dass die elektronische Vorrichtung die Senkenvorrichtung ist, und, wenn die Peer-Vorrichtung die Senkenvorrichtung ist, bestimmt wird, dass die elektronische Vorrichtung die Quellvorrichtung ist.

10. Elektronische Vorrichtung nach Anspruch 9, wobei das Schaltmodul einen ersten Schalter, einen zweiten Schalter und einen dritten Schalter umfasst, der erste Schalter mit dem Anzeigesendeprozessor verbunden ist, der zweite Schalter mit dem Anzeigeempfangsprozessor verbunden ist, der dritte Schalter mit dem Pin verbunden ist, und, nachdem bestimmt wird, dass die Vorrichtungsart der elektronischen Vorrichtung die Senkenvorrichtung ist, die Steuerung den zweiten Schalter dazu steuert, sich mit dem dritten Schalter zu verbinden, oder, nachdem bestimmt wird, dass die Vorrichtungsart der elektronischen Vorrichtung die Quellvorrichtung ist, die Steuerung den ersten Schalter dazu steuert, sich mit dem dritten Schalter zu verbinden.

## Revendications

1. Procédé d'émission de données pour un dispositif électronique, dans lequel le dispositif électronique comprend une interface bidirectionnelle (21, 605), l'interface bidirectionnelle est utilisée pour envoyer et recevoir des données multimédia, et le procédé comprend :
après qu'un dispositif homologue est inséré dans l'interface bidirectionnelle, la détermination d'un type de dispositif du dispositif homologue et d'un type de dispositif du dispositif électronique ; et
après qu'il est déterminé que le type de dispositif du dispositif électronique est un dispositif récepteur, l'envoi des données multimédia envoyées par le dispositif homologue à un processeur de réception d'affichage (29, 334) du dispositif électronique à travers l'interface bidirectionnelle, dans lequel le dispositif récepteur est un dispositif de réception d'affichage ou un dispositif d'entrée vidéo, et dans lequel le processeur de réception d'affichage comprend une interface de couche physique de réception de port d'affichage (291) ;
après qu'il est déterminé que le type de dispositif du dispositif électronique est un dispositif source, l'envoi des données multimédia générées par un processeur d'envoi d'affichage (28, 333) du dispositif électronique au dispositif homologue à travers l'interface bidirectionnelle, dans lequel le dispositif source est un dispositif d'envoi d'affichage ou un dispositif de sortie vidéo, et dans lequel le processeur d'envoi d'affichage comprend une interface de couche physique d'émission Display Port (282) ;
dans lequel le procédé comprend également :
après qu'il est déterminé que le type de dispositif du dispositif électronique est le dispositif récepteur, la connexion de l'interface bidirectionnelle au processeur de réception d'affichage ;
après qu'il est déterminé que le type de dispositif du dispositif électronique est le dispositif source, la connexion de l'interface bidirectionnelle au processeur d'envoi d'affichage ;
dans lequel la détermination d'un type de dispositif du dispositif homologue et d'un type de dispositif du dispositif électronique comprend :
la détermination du type de dispositif du dispositif homologue en fonction d'un signal transmis sur l'interface bidirectionnelle ; et
la détermination du type de dispositif du dispositif électronique en fonction du type de dispositif du dispositif homologue ;
dans lequel l'interface bidirectionnelle est un port de bus série universel de type C ; et
la détermination du type de dispositif du dispositif homologue en fonction d'un signal transmis sur l'interface bidirectionnelle comprend :
la détection d'un état de niveau d'une broche sur l'interface bidirectionnelle, et la détermination du type de dispositif du dispositif homologue en fonction de l'état de niveau de la broche, dans lequel, lorsque l'état de niveau de la broche est à un niveau élevé, le dispositif homologue est le dispositif source ; lorsque l'état de niveau de la broche est un niveau bas, le dispositif homologue est le dispositif récepteur :
dans lequel la détermination du type de dispositif du dispositif électronique en fonction du type de dispositif du dispositif homologue comprend :
lorsque le dispositif homologue est le dispositif source, la détermination du fait que le dispositif électronique est le dispositif récepteur ;
lorsque le dispositif homologue est le dispositif récepteur, la détermination du fait que le dispositif électronique est le dispositif source.

2. Procédé selon la revendication 1, dans lequel, lorsque l'état de niveau de la broche est commuté entre un niveau haut et un niveau bas, le dispositif homologue est un dispositif de port à double rôle.

3. Procédé selon la revendication 2, dans lequel, lorsque le dispositif homologue est le dispositif de port à double rôle, la détermination du type de dispositif du dispositif électronique et du type de dispositif du dispositif homologue par l'intermédiaire d'un processus de négociation de rôle ou d'un processus de commutation de rôle.

4. Procédé selon l'une quelconque des revendications 1 à 3, dans lequel, avant de déterminer le type de dispositif du dispositif électronique et le type de dispositif du dispositif homologue par l'intermédiaire d'un processus de négociation de rôle ou d'un processus de changement de rôle, le procédé comprend également :
la détermination d'un type de dispositif initial du dispositif électronique comme dispositif source.

5. Procédé selon la revendication 4, dans lequel, après la détermination d'un type de dispositif initial du dispositif électronique en tant que dispositif source, le procédé comprend également :
l'obtention, à travers l'interface bidirectionnelle, des informations indiquant si le périphérique homologue prend en charge un port d'affichage orienté vers le haut, et le démarrage du processus de négociation de rôle ou du processus de commutation de rôle pour le périphérique homologue qui prend en charge le port d'affichage orienté vers le haut.

6. Procédé selon la revendication 4 ou 5, dans lequel, après la détermination d'un type de dispositif initial du dispositif électronique en tant que dispositif source, le procédé comprend également :
l'obtention, par l'intermédiaire de l'interface bidirectionnelle, d'au moins un type d'informations parmi les informations de fournisseur, les informations de fournisseur, les informations de préférence de type de dispositif et les informations de fonction de dispositif du dispositif homologue ; le fait de déterminer, sur la base des informations obtenues, si le dispositif homologue et le dispositif électronique sont le même appareil ; et si le dispositif homologue et le dispositif électronique sont les mêmes, l'exécution du processus de négociation de rôle, ou si le dispositif homologue et le dispositif électronique sont différents, l'exécution du processus de commutation de rôle.

7. Procédé selon l'une quelconque des revendications 3 à **6,** dans lequel le processus de négociation de rôle comprend : l'affichage d'un message de requête sur le dispositif électronique, dans lequel le message de requête est utilisé pour obtenir un type de dispositif final du dispositif électronique ; et
la définition d'un type de dispositif final du dispositif homologue en fonction du type de dispositif final du dispositif électronique ; et
le processus de changement de rôle comprend : l'envoi d'un message de demande de changement de rôle au dispositif homologue ; et
la définition du type de dispositif final du dispositif homologue et du type final du dispositif électronique en fonction d'un message de réponse du dispositif homologue.

8. Procédé selon l'une quelconque des revendications 1 à 7, dans lequel l'interface bidirectionnelle est également utilisée pour une charge bidirectionnelle.

9. Dispositif électronique, dans lequel le dispositif électronique comprend une interface bidirectionnelle (21, 505), un dispositif de commande (604), un processeur de réception d'affichage (29, 334) et un processeur d'envoi d'affichage (28, 333), dans lequel l'interface bidirectionnelle comprend une broche, dans lequel la broche est configurée pour se connecter à un dispositif homologue inséré dans l'interface bidirectionnelle, et dans lequel l'interface bidirectionnelle est un port de bus série universel de type C ;
le dispositif de commande est configuré pour : déterminer un type de dispositif du dispositif homologue et un type de dispositif du dispositif électronique ; et après qu'il est déterminé que le type de dispositif du dispositif électronique est un dispositif récepteur, envoyer des données multimédia envoyées par le dispositif homologue au processeur de réception d'affichage du dispositif électronique à travers l'interface bidirectionnelle, dans lequel le dispositif récepteur est un dispositif de réception d'affichage ou un dispositif d'entrée vidéo, et dans lequel le processeur de réception d'affichage comprend une interface de couche physique de réception Display Port (291) ; après qu'il est déterminé que le type de dispositif du dispositif électronique est un dispositif source, envoyer des données multimédia générées par le processeur d'envoi d'affichage du dispositif électronique au dispositif homologue à travers l'interface bidirectionnelle, dans lequel le dispositif source est un dispositif d'envoi d'affichage ou un dispositif de sortie vidéo, et dans lequel le processeur d'envoi d'affichage comprend une interface de couche physique d'émission Display Port (282) ;
le processeur de réception d'affichage est configuré pour afficher les données multimédia reçues ; et
le processeur d'envoi d'affichage est configuré pour traiter et obtenir les données multimédia,
dans lequel le dispositif électronique comprend également un module de commutation, et après qu'il est déterminé que le type de dispositif du dispositif électronique est le dispositif récepteur, le module de commutation est configuré pour connecter l'interface bidirectionnelle au processeur de réception d'affichage, et
après qu'il est déterminé que le type de dispositif du dispositif électronique est le dispositif source, le module de commutation est configuré pour connecter l'interface bidirectionnelle au processeur d'envoi d'affichage ;
dans lequel le dispositif de commande est configuré pour : détecter un état de niveau de la broche sur l'interface bidirectionnelle, déterminer le type de dispositif du dispositif homologue en fonction de l'état de niveau de la broche, et déterminer le type de dispositif du dispositif électronique en fonction du type de dispositif du dispositif homologue, et dans lequel, lorsque le dispositif homologue est le dispositif source, le dispositif électronique est déterminé comme étant le dispositif récepteur, et lorsque le dispositif homologue est le dispositif récepteur, le dispositif électronique est déterminé comme étant le dispositif source.

10. Dispositif électronique selon la revendication 9, dans lequel le module de commutation comprend un premier commutateur, un deuxième commutateur et un troisième commutateur, le premier commutateur est connecté au processeur d'envoi d'affichage, le deuxième commutateur est connecté au processeur de réception d'affichage, le troisième commutateur est connecté à la broche, et après qu'il est déterminé que le type de dispositif du dispositif électronique est le dispositif récepteur, le dispositif de commande commande au deuxième commutateur de se connecter au troisième commutateur, ou après qu'il est déterminé que le type de dispositif du dispositif électronique est le dispositif source, le dispositif de commande commande au premier commutateur de se connecter au troisième commutateur.
